# EUROPÄISCHE PATENTANMELDUNG

(11) **EP 2 062 789 A1**
(43) Veröffentlichungstag der Anmeldung: **27.05.2009**
(21) Anmeldenummer: 07022600.6
(22) Anmeldetag: 21.11.2007
(51) Int. Cl.: B60R 21/015

(54) **Insassenerfassungssystem**

(71) Anmelder: Delphi Technologies, Inc., Troy, Michigan 48007 (US)
(72) Erfinder: Fischer, Thomas, 57482 Wenden (DE)
(74) Vertreter: Manitz, Finsterwald & Partner GbR

(57) **Zusammenfassung**

Ein Insassenerfassungssystem (38) für ein Fahrzeug umfasst eine insbesondere unter der Sitzfläche eines Fahrzeugsitzes vorgesehene Antennenanordnung (36) einer kapazitätsbasierten Insassenerfassungseinrichtung zur Erzeugung eines ersten Belegt-Signals im Fall einer Belegung des Fahrzeugsitzes durch eine Person aufgrund einer von der Antennenanordnung ausgehenden, durch die Person hindurchgehenden Strahlung vorgebbarer Mindeststärke, wenigstens eine unter der Sitzfläche des Fahrzeugsitzes vorgesehene Schalteranordnung (32) einer gewichtsbasierten Insassenerfassungseinrichtung, die in Abhängig von dem auf sie wirkenden Druck betätigbar ist, um im Fall einer Bewegung des Fahrzeugsitzes durch eine insbesondere erwachsene Person ein zweites Belegt-Signal zu erzeugen, sowie eine Steuer- und/oder Auswerteeinheit, die in dem Fall, dass sowohl das erste Belegt-Signal der kapazitätsbasierten Insassenerfassungseinrichtung als auch das zweite Belegt-Signal der gewichtsbasierten Insassenerfassungseinrichtung vorliegt, ein Belegt-Bestätigungs-Signal erzeugt und in dem Fall, dass von den beiden Belegt-Signalen nur das zweite Belegt-Signal der gewichtsbasierten Insassenerfassungseinrichtung vorliegt, ein Fehlersignal erzeugt.

## Beschreibung

Die Erfindung betrifft ein Insassenerfassungssystem für ein Fahrzeug mit einer insbesondere unter der Sitzfläche eines Fahrzeugsitzes vorgesehenen Antennenanordnung einer kapazitätsbasierten Insassenerfassungseinrichtung. Sie betrifft ferner eine Antennen- und Schalteranordnung für ein solches Insassenerfassungssystem.

Kapazitätsbasierte Insassenerfassungseinrichtungen sind bekannt und dienen insbesondere der Unterscheidung zwischen einem auf einem Fahrzeugsitz befindlichen Kindersitz und einem auf dem Fahrzeugsitz sitzenden Erwachsenen. Für einen Einsatz in den USA müssen diese Insassenerfassungseinrichtungen insbesondere die Vorschriften der FMVSS 208 (Federal Motor Vehicle Safety Standard) erfüllen. Dabei soll insbesondere sicherhergestellt sein, dass bei Kleinkindern in einem Alter von bis zu einem Jahr der oder die dem Beifahrersitz zugeordneten Airbags nicht ausgelöst werden.

Zur Erfüllung der genannten Unterscheidungsfunktion wird bei einer solchen kapazitätsbasierten Insassenerfassungseinrichtung eine im Sitzkissen unterhalb der Sitzfläche angeordnete Antenne verwendet, die mit einer Wechselspannung einer Frequenz von 50 kHz betrieben wird. Nimmt eine Person den Platz in dem Fahrzeugsitz ein, so ergibt sich eine Kopplung zwischen der Person und der Antenne, was dazu führt, dass eine ausgesandte Strahlung durch die Person hindurch zum Fahrzeugchassis gelangt, an dem die betreffende Feldstärke gemessen wird. Befindet sich ein Kindersitz auf dem Fahrzeugsitz oder ist dieser leer, so fehlt es an einer solchen Kopplung.

In Zusammenhang mit derartigen kapazitätsbasierten Insassenerfassungseinrichtungen treten jedoch einige Probleme auf. So ist eine solche Einrichtung nicht in der Lage, zwischen einem leeren und einem belegten Fahrzeugsitz zu unterscheiden. Zudem wird die Einrichtung in unerwünschter Weise auch durch Feuchtigkeit beeinflusst. So kann beispielsweise Wasser auf dem Fahrzeugkissen oder ein feuchtes Kissen eine deutliche Kopplung zum Chassis hin bewirken. Befindet sich ein Kindersitz auf einem nassen Sitz, so kann die durchgeführte Klassifizierung fehlschlagen.

Der Erfindung liegt die Aufgabe zugrunde, ein verbessertes Insassenerfassungssystem für ein Fahrzeug zu schaffen, bei dem die zuvor genannten Probleme auf zuverlässige Art und Weise beseitigt sind.

Erfindungsgemäß wird diese Aufgabe gelöst durch ein Insassenerfassungssystem für ein Fahrzeug mit einer insbesondere unter der Sitzfläche eines Fahrzeugsitzes vorgesehenen Antennenanordnung einer kapazitätsbasierten Insassenerfassungseinrichtung zur Erzeugung eines ersten Belegt-Signals im Fall einer Belegung des Fahrzeugsitzes durch eine Person aufgrund einer von der Antennenanordnung ausgehenden, durch die Person hindurchgehenden Strahlung vorgebbarer Mindeststärke, wenigstens einer unter der Sitzfläche des Fahrzeugsitzes vorgesehenen Schalteranordnung einer gewichtsbasierten Insassenerfassungseinrichtung, die in Abhängigkeit von dem auf sie wirkenden Druck betätigbar ist, um im Fall einer Belegung des Fahrzeugsitzes durch eine insbesondere erwachsene Person ein zweites Belegt-Signal zu erzeugen, sowie einer Steuer-und/oder Auswerteeinheit, die in dem Fall, dass sowohl das erste Belegt-Signal der kapazitätsbasierten Insassenerfassungseinrichtung als auch das zweite Belegt-Signal der gewichtsbasierten Insassenerfassungseinrichtung vorliegt, ein Belegt-Bestätigungssignal erzeugt und in dem Fall, dass von den beiden Belegt-Signalen nur das zweite Belegt-Signal der gewichtsbasierten Insassenerfassungseinrichtung vorliegt, ein Fehlersignal erzeugt.

Die bei den bekannten kapazitätsbasierten Insassenerfassungseinrichtungen bestehenden Probleme sind erfindungsgemäß also durch die zusätzlich zu der Antennenanordnung vorgesehene Schalteranordnung beseitigt.

Bevorzugt erzeugt die Steuer- und/oder Auswerteeinrichtung das Belegt-Bestätigungssignal nur dann, wenn sowohl das erste Belegt-Signal der kapazitätsbasierten Insassenerfassungseinrichtung als auch das zweite Belegt-Signal der gewichtsbasierten Insassenerfassungseinrichtung vorliegt.

Zweckmäßigerweise erzeugt die Steuer- und/oder Auswerteeinrichtung in dem Fall, dass weder das erste Belegt-Signal der kapazitätsbasierten Insassenerfassungseinrichtung noch das zweite Belegt-Signal der gewichtsbasierten Insassenerfassungseinrichtung vorliegt, ein Nicht-belegt-Bestätigungssignal.

Dabei ist das Insassenerfassungssystem bevorzugt so ausgelegt, dass die Steuer- und/oder Auswerteinrichtung das Nicht-belegt-Bestätigungssignal nur dann erzeugt, wenn weder das erste Belegt-Signal der kapazitätsbasierten Insassenerfassungseinrichtung noch das zweite Belegt-Signal der gewichtsbasierten Insassenerfassungseinrichtung vorliegt.

Von Vorteil ist insbesondere auch, wenn die Steuer- und/oder Auswerteeinrichtung in dem Fall, dass weder das erste Belegt-Signal der kapazitätsbasierten Insassenerfassungseinrichtung noch das zweite Belegt-Signal der gewichtsbasierten Insassenerfassungseinrichtung vorliegt, einen der Justierung der kapazitätsbasierten Insassenerfassungseinrichtung dienenden Lernzyklus für den nicht belegten Fahrzeugsitz auslöst.

Gemäß einer zweckmäßigen praktischen Ausführungsform des erfindungsgemäßen Insassenerfassungssystems wird die Antennenanordnung in dem Fall, dass weder das erste Belegt-Signal der kapazitätsbasierten Insassenerfassungseinrichtung noch das zweite Belegt-Signal der gewichtsbasierten Insassenerfassungseinrichtung vorliegt, über die Steuer-und/oder Auswerteeinheit deaktiviert.

In dem Fall, dass weder das erste Belegt-Signal der kapazitätsbasierten Insassenerfassungseinrichtung noch das zweite Belegt-Signal der gewichtsbasierten Insassenerfassungseinrichtung vorliegt, kann die gewichtsbasierte Insassenerfassungseinrichtung zur Überwachung des Zustands der Schalteranordnung aktiviert bleiben.

Die Schalteranordnung ist bevorzugt in der Antennenanordnung integriert.

Die Antennenanordnung umfasst zweckmäßigerweise mehrere Antennen.

Die Schalteranordnung kann zweckmäßigerweise mehrere Schalter umfassen.

Gemäß einer bevorzugten praktischen Ausführungsform sind die Antennenanordnung und/oder die Schalteranordnung in Form einer flexiblen gedruckten Schaltung ausgeführt, wobei die Schalteranordnung in der Antennenanordnung integriert ist. Der bzw. die Schalter der Schalteranordnung können also insbesondere als Folienschalter vorgesehen sein.

Die beiden Kontakte eines jeweiligen Schalters der Schaltungsanordnung sind bevorzugt durch definierte Abschnitte zweier benachbarter Antennen der Antennenanordnung gebildet. Dabei können durch definierte Abschnitte eines jeweiligen Antennenpaares die Kontakte mehrerer Schalter der Schaltungsanordnung gebildet werden.

Bevorzugt ist eine jeweilige Antenne der Antennenanordnung durch eine Kupferschicht gebildet. Dabei kann die Antennenanordnung mehrere jeweils durch eine Kupferschicht gebildete Antennen umfassen, wobei diese Antennen jeweils mit einer Isolierschicht versehen sind. Einander benachbarte mit Isolierschichten versehene Antennen können mechanisch jeweils über ein Klebeband miteinander verbunden sein.

Von Vorteil ist insbesondere auch, wenn ein jeweiliger in Form einer flexiblen gedruckten Schaltung ausgeführter Schalter der Schalteranordnung zwei vorzugsweise durch Antennenabschnitte gebildete elektrische Kontakte umfasst, die randseitig durch wenigstens einen insbesondere flexiblen Abstandshalter voneinander getrennt sind, wobei wenigstens einer der Kontakte bei einer entsprechenden Druckbeaufschlagung zum jeweils anderen Kontakt hin eindrückbar ist.

Dabei kann außen auf die elektrischen Kontakte jeweils eine insbesondere aus PET (Polyethylenterephthalat) bestehende Isolierschicht aufgebracht, insbesondere aufgeklebt sein.

Der Abstandshalter ist bevorzugt mit den beiden elektrischen Kontakten verklebt.

Von Vorteil ist insbesondere auch, wenn der Abstandshalter ein Isolierband umfasst.

Zwischen dem Isolierband und den beiden elektrischen Kontakten kann der Abstandshalter vorteilhafterweise jeweils ein Laminat aufweisen. Dabei sind die Laminate zweckmäßigerweise jeweils mit dem Isolierband und dem betreffenden elektrischen Kontakt verklebt.

Die bei den bisher üblichen kapazitätsbasierten Insassenerfassungseinrichtungen auftretenden Probleme werden also beseitigt, indem der Antennenstruktur Schalter zugeordnet werden. Solche Schalter, die insbesondere zur Erfüllung einer Gurtwarnfunktion ausgelegt sein können, liefern Informationen darüber, ob der Fahrzeugsitz leer oder durch einen Erwachsenen belegt ist. Das durch die Schalter gelieferte Signal kann demzufolge dazu verwendet werden, festzustellen, ob der Fahrzeugsitz leer ist oder nicht.

Liefern die Schalter die Information, dass der Fahrzeugsitz leer ist und wird auch durch die kapazitätsbasierte Insassenerfassungseinrichtung signalisiert, dass der Fahrzeugsitz leer ist, so kann die Aussendung der Strahlung gestoppt werden und es können nur die Schalter überwacht werden. Zudem kann der Sitzstatus auf "leerer Sitz" gesetzt werden, und es kann ein Leerzustand-Lernzyklus für die Signalstärke der empfangenen Strahlung durchgeführt werden.

Liefern die Schalter die Information, dass der Fahrzeugsitz leer ist und signalisiert die kapazitätsbasierte Insassenerfassungseinrichtung, dass der Fahrzeugsitz belegt ist, so liegt ein Widerspruch zwischen den Signalen vor (z.B. leerer Sitz, Antenne gegenüber dem Chassis kurzgeschlossen, Isofix-Sitz). Entsprechend kann ein Fehler vorliegen, und das System kann in einen Fehler-Sicherungsmodus übergehen.

Die Schalterstruktur kann auf der Technologie einer flexiblen gedruckten Schaltung (FPC, flexible printed circuit) basieren, wobei vorteilhafterweise dasselbe Material wie für die Antennenanordnung selbst verwendet werden kann, sodass der zusätzliche Herstellungsaufwand minimal ist und die Herstellungskosten entsprechend gering bleiben.

Die erfindungsgemäße Antennen- und Schalteranordnung zeichnet sich dadurch aus, dass sie in Form einer flexiblen gedruckten Schaltung ausgeführt ist, bei der die Schalteranordnung in der Antennenanordnung integriert ist.

Die Erfindung wird im Folgenden anhand von Ausführungsbeispielen unter Bezugnahme auf die Zeichnung näher erläutert; in dieser zeigen:
- Fig. 1: eine schematische Querschnittsdarstellung einer beispielhaften Ausführungsform eines Schalters einer in dem erfindungsgemäßen Insassenerfassungssystem einsetzbaren Schalteranordnung,
- Fig. 2: eine schematische Draufsicht des Schalters gemäß Fig. 1,
- Fig. 3: eine schematische Darstellung der Integration der entsprechend dem Ergebnis eines generischen Algorithmus verteilten Schalter in der Antennenanordnung bzw. dem entsprechenden Gurtwarnlayout und
- Fig. 4: eine schematische Darstellung einer kombinierten Antennen/ Schalter-Anordnung.

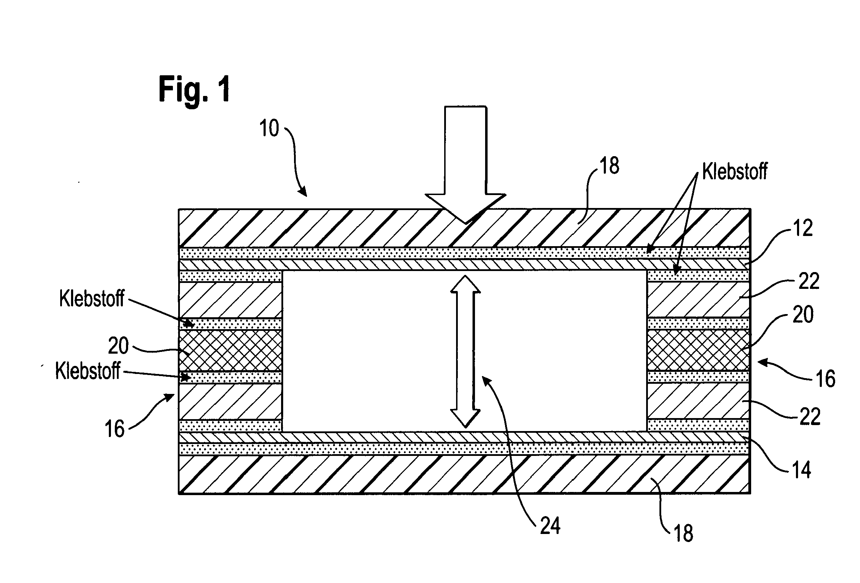

Fig. 1 zeigt in schematischer Querschnittsdarstellung eine beispielhafte Ausführungsform eines Schalters 10 einer im erfindungsgemäßen Insassenerfassungssystem einsetzbaren Schalteranordnung.

Der in Form einer flexiblen gedruckten Schaltung (FPC, flexible printed circuit) ausgeführte Schalter 10 umfasst zwei vorzugsweise durch Antennenabschnitte gebildete elektrische Kontakte 12, 14, die randseitig durch wenigstens einen insbesondere flexiblen Abstandshalter 16 voneinander getrennt sind. Dabei ist wenigstens einer der Kontakte 12, 14 bei einer entsprechenden Druckbeaufschlagung zum jeweils anderen Kontakt hin eindrückbar.

Außen auf die elektrischen Kontakte 12, 14 kann jeweils eine insbesondere aus PET bestehende Isolierschicht 18 aufgebracht, insbesondere aufgeklebt sein.

Der Abstandshalter 16 kann mit den beiden elektrischen Kontakten 12, 14 verklebt sein.

Zudem umfasst der Abstandshalter 16 ein Isolierband 20. Zwischen dem Isolierband 20 und den beiden elektrischen Kontakten 12, 14 kann der Abstandshalter 16 jeweils ein Laminat 22 aufweisen.

Die Laminate 22 können jeweils mit dem Isolierband 20 und dem betreffenden elektrischen Kontakt 12 bzw. 14 verklebt sein.

Durch eine entsprechende Druckbeaufschlagung können die beiden elektrischen Kontakte 12, 14 im Kontaktbereich 24 miteinander in Kontakt kommen.

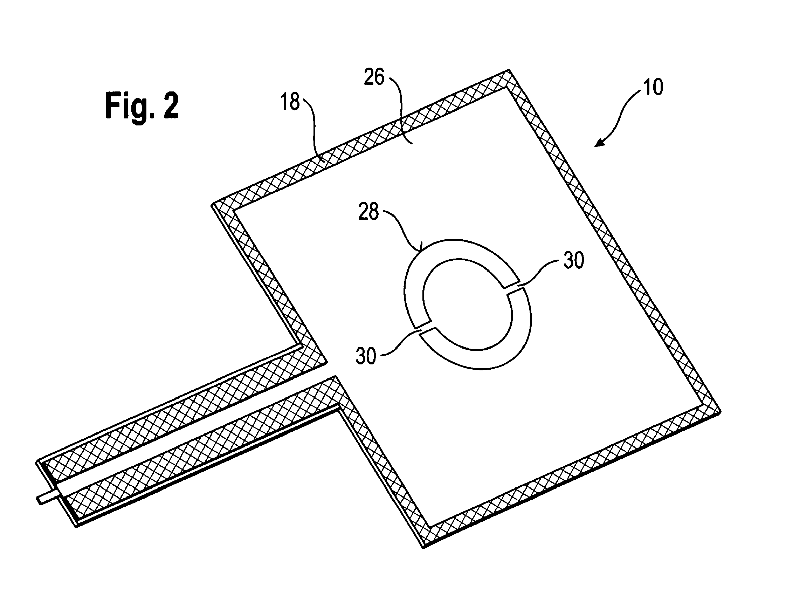

Fig. 2 zeigt eine schematische Draufsicht des Schalters 10 gemäß Fig. 1. In dieser Fig. 2 sind eine wenigstens eine Antenne sowie wenigstens einen Schalterkontakt bildende Kupferschicht 26, eine insbesondere aus PET bestehende Isolierschicht 18, die Außenkontur 28 des Schalters sowie elektrische Anschlussstellen 30 zu erkennen.

Ein oder mehrere derartige Schalter 10 können eine insbesondere unter der Sitzfläche des Fahrzeugsitzes anzuordnende Schalteranordnung einer gewichtsbasierten Insassenerfassungseinrichtung bilden. Dabei sind die Schalter 10 in Abhängigkeit von dem auf sie wirkenden Druck betätigbar.

Die Schalteranordnung kann mit einer ebenfalls unter der Sitzfläche des Fahrzeugsitzes vorgesehenen Antennenanordnung einer kapazitätsbasierten Insassenerfassungseinrichtung kombiniert sein, wobei die Schalteranordnung bevorzugt in der Antennenanordnung integriert ist. Auch die Antennenanordnung kann grundsätzlich eine oder mehrere Antennen umfassen.

Die Antennenanordnung und/oder die Schalteranordnung können insbesondere in Form einer flexiblen gedruckten Schaltung ausgeführt sein. Dabei können die Antennenanordnung und die Schalteranordnung insbesondere in ein und derselben flexiblen Schaltfolie verwirklicht sein. Die Schalter der Schalteranordnung können in diesem Fall also insbesondere als Folienschalter ausgeführt sein.

Die beiden elektrische Kontakte eines jeweiligen Schalters 10 der Schaltungsanordnung können durch definierte Abschnitte zweier benachbarter Antennen der Antennenanordnung gebildet sein. Dabei können durch definierte Abschnitte eines jeweiligen Antennenpaares die Kontakte mehrerer Schalter 10 der Schaltungsanordnung gebildet werden.

Eine jeweilige Antenne der Antennenanordnung kann insbesondere durch eine Kupferschicht gebildet sein.

Die die Antennenanordnung umfassende kapazitätsbasierte Insassenerfassungseinrichtung kann insbesondere so ausgeführt sein, dass im Fall einer Belegung des Fahrzeugsitzes durch eine Person aufgrund einer von der Antennenanordnung ausgehenden, durch die Person hindurchgehenden Strahlung vorgebbarer Mindeststärke ein erstes Belegt-Signal erzeugt wird. Um insbesondere den in den USA geltenden Vorschriften Rechnung zu tragen, kann dieses kapazitätsbasierte Insassenerfassungseinrichtung so ausgelegt sein, dass Kleinkinder bis zu 1 Jahr nicht erfasst werden. Dadurch ist sichergestellt, dass der jeweilige Airbag nicht ausgelöst wird.

Die weitere Informationen liefernde, die Schalteranordnung umfassende gewichtsbasierte Insassenerfassungseinrichtung ist zweckmäßigerweise so ausgeführt, dass im Fall einer Belegung des Fahrzeugsitzes durch eine insbesondere erwachsene Person ein zweites Belegt-Signal erzeugt wird.

Zudem kann eine Steuer- und/oder Auswerteeinheit vorgesehen sein, die so ausgeführt ist, dass in dem Fall, dass sowohl das erste Belegt-Signal der kapazitätsbasierten Insassenerfassungseinrichtung als auch das zweire Belegt-Signal der gewichtsbasierten Insassenerfassungseinrichtung vorliegt, ein Belegt-Bestätigungs-Signal erzeugt und in dem Fall, dass von den beiden Belegt-Signalen nur das zweite Belegt-Signal der gewichtsbasierten Insassenerfassungseinrichtung vorliegt, ein Fehlersignal erzeugt wird.

Dabei kann die Steuer- und/oder Auswerteeinheit insbesondere auch so ausgeführt sein, dass das Belegt-Bestätigungs-Signal nur dann erzeugt wird, wenn sowohl das erste Belegt-Signal der kapazitätsbasierten Insassenerfassungseinrichtung als auch das zweite Belegt-Signal der gewichtsbasierten Insassenerfassungseinrichtung vorliegt.

Zweckmäßigerweise ist die Steuer- und/oder Auswerteeinrichtung so ausgeführt, dass in dem Fall, dass weder das erste Belegt-Signal der kapazitätsbasierten Insassenerfassungseinrichtung noch das zweite Belegt-Signal der gewichtsbasierten Insassenerfassungseinrichtung vorliegt, ein Nicht-belegt-Bestätigungs-Signal erzeugt wird. Bevorzugt erzeugt die Steuer- und/oder Auswerteeinrichtung das Nicht-belegt-Bestätigungs-Signal nur dann, wenn weder das erste Belegt-Signal der kapazitätsbasierten Insassenerfassungseinrichtung noch das zweite Belegt-Signal der gewichtsbasierten Insassenerfassungseinrichtung vorliegt.

Darüber hinaus kann die Steuer- und/oder Auswerteeinrichtung insbesondere auch so ausgeführt sein, dass sie in dem Fall, dass weder das erste Belegt-Signal der kapazitätsbasierten Insassenerfassungseinrichtung noch das zweite Belegt-Signal der gewichtsbasierten Insassenerfassungseinrichtung vorliegt, einen der Justierung der kapazitätsbasierten Insassenerfassungseinrichtung dienenden Lernzyklus für den nicht belegten Fahrzeugsitz auslöst.

In dem Fall, dass weder das erste Belegt-Signal der kapazitätsbasierten Insassenerfassungseinrichtung noch das zweite Belegt-Signal der gewichtsbasierten Insassenerfassungseinrichtung vorliegt, kann die Antennenanordnung über die Steuer- und/oder Auswerteeinrichtung deaktiviert werden.

Liegt weder das erste Belegt-Signal der kapazitätsbasierten Insassenerfassungseinrichtung noch das zweite Belegt-Signal der gewichtsbasierten Insassenerfassungseinrichtung vor, so kann die gewichtsbasierte Insassenerfassungseinrichtung zur Überwachung des Zustands der Schalter-anordnung aktiviert bleiben.

Dieses sowohl eine kapazitätsbasierte Insassenerfassungseinrichtung als auch eine gewichtsbasierte Insassenerfassungseinrichtung umfassende Insassenerfassungssystem kann insbesondere zur Erhöhung der Wirksamkeit des Schutzes durch den Airbag beispielsweise aufgrund eines intelligenten Einsatzes oder Zurückhaltens insbesondere des Beifahrer-Airbags eingesetzt werden. Unter Verwendung entsprechender Algorithmen für die Insasseneinstufung und einer entsprechenden Signalverarbeitung wird der Airbag-Controller in die Lage versetzt, beispielsweise den Beifahrer-Airbag variabler einzusetzen oder zurückhalten. Das System kann die Belastung des Fahrzeugsitzes durch den Insassen messen, den Insassen aufgrund des Gewichts klassifizieren und die Informationen auf der Basis der Insassencharakteristika an den Airbag-Controller weitergeben, was ein wesentlicher Faktor bei der Entscheidung ist, ob und zu welchem Ausmaß der Airbag eingesetzt werden soll. Dabei wird durch die Kombination der kapazitätsbasierten Insassenerfassungseinrichtung mit der gewichtsbasierten Insassenerfassungseinrichtung die Sicherheit und Zuverlässigkeit deutlich erhöht. Indem die Schalteranordnung der gewichtsbasierten Insassenerfassungseinrichtung in der Antennenanordnung der kapazitätsbasierten Insassenerfassungseinrichtung integriert ist und die Antennenanordnung und die Schalteranordnung in Form einer gemeinsamen flexiblen gedruckten Schaltung ausgeführt sind, ist der Mehraufwand minimal, wodurch die Herstellungskosten entsprechend minimiert werden.

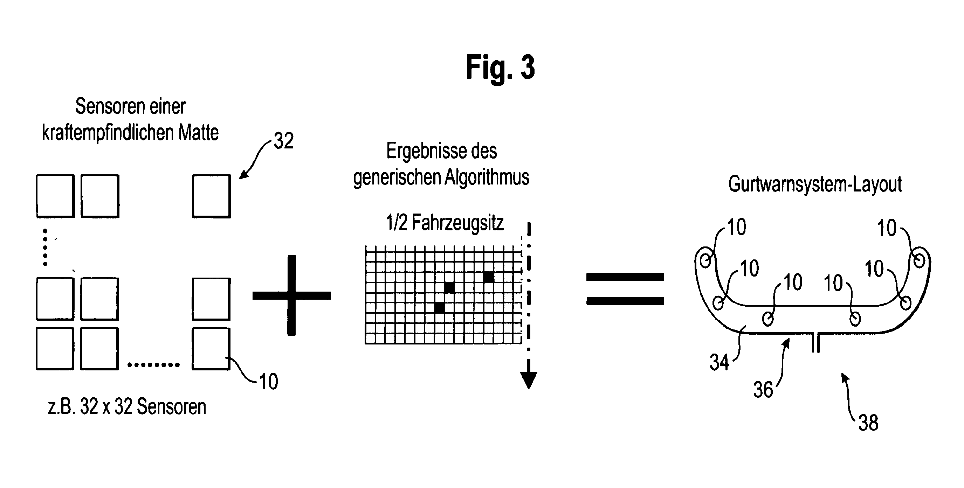

Fig. 3 zeigt in schematischer Darstellung die Integration der entsprechend dem Ergebnis eines generischen Algorithmus verteilten Schalter 10 der Schalteranordnung 32 in der eine oder mehrere Antennen 34 umfassenden Antennenanordnung 36.

Danach werden ausgehend von einer eine Vielzahl von druckempfindlichen Schaltern 10 umfassenden Schalteranordnung 32 über einen auf die über diese Schalteranordnung 32 erhaltenen gewichtsbasierten Daten angewandten generischen Algorithmus die optimalen Positionen und/oder Schalteranzahl für das kombinierte Insassenerfassungssystem 38 bestimmt.

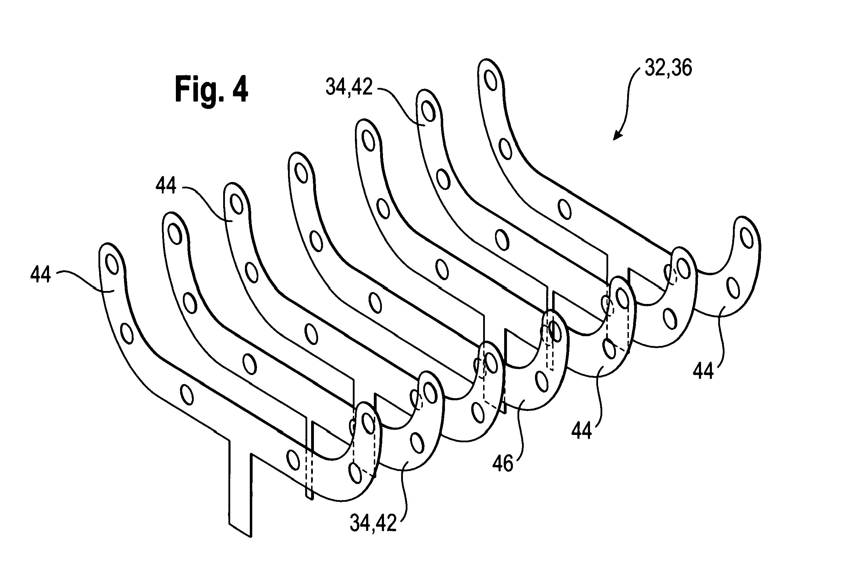

Fig. 4 zeigt in schematischer Darstellung eine beispielhafte Ausführungsform einer kombinierten Antennen/Schalter-Anordnung 32, 36 des Insassenerfassungssystems 38.

Dabei kann die Antennenanordnung 36 beispielsweise mehrere jeweils durch eine Kupferschicht 42 gebildete Antennen 34 umfassen. Zwischen den Antennen 34 kann jeweils eine Isolierschicht 44 vorgesehen sein. Einander benachbarte, mit Isolierschichten 44 versehene Antennen 34 können mechanisch jeweils über ein Klebeband 46 miteinander verbunden sein.

### Bezugszeichenliste

- 10: Schalter
- 12: elektrischer Kontakt
- 14: elektrischer Kontakt
- 16: Abstandshalter
- 18: Isolierschicht
- 20: Isolierband
- 22: Laminat
- 24: Kontaktbereich
- 26: Kupferschicht
- 28: Außenkontur
- 30: elektrische Anschlussstelle
- 32: Schalteranordnung
- 34: Antenne
- 36: Antennenanordnung
- 38: Insassenerfassungssystem
- 40: Antennen/Schalter-Anordnung
- 42: Kupferschicht
- 44: Isolierschicht
- 46: Klebeband

## Patentansprüche

1. Insassenerfassungssystem (38) für ein Fahrzeug mit einer insbesondere unter der Sitzfläche eines Fahrzeugsitzes vorgesehenen Antennenanordnung (36) einer kapazitätsbasierten Insassenerfassungseinrichtung zur Erzeugung eines ersten Belegt-Signals im Fall einer Belegung des Fahrzeugsitzes durch eine Person aufgrund einer von der Antennenanordnung ausgehenden, durch die Person hindurchgehenden Strahlung vorgebbarer Mindeststärke, wenigstens einer unter der Sitzfläche des Fahrzeugsitzes vorgesehenen Schalteranordnung (32) einer gewichtsbasierten Insassenerfassungseinrichtung, die in Abhängigkeit von dem auf sie wirkenden Druck betätigbar ist, um im Fall einer Belegung des Fahrzeugsitzes durch eine insbesondere erwachsene Person ein zweites Belegt-Signal zu erzeugen, sowie einer Steuer- und/oder Auswerteeinheit, die in dem Fall, dass sowohl das erste Belegt-Signal der kapazitätsbasierten Insassenerfassungseinrichtung als auch das zweite Belegt-Signal der gewichtsbasierten Insassenerfassungseinrichtung vorliegt, ein Belegt-Bestätigungssignal erzeugt und in dem Fall, dass von den beiden Belegt-Signalen nur das zweite Belegt-Signal der gewichtsbasierten Insassenerfassungseinrichtung vorliegt, ein Fehlersignal erzeugt.

2. Insassenerfassungssystem nach Anspruch 1,
**dadurchgekennzeichnet,**
**dass** die Steuer- und/oder Auswerteeinrichtung das Belegt-Bestätigungssignal nur dann erzeugt, wenn sowohl das erste Belegt-Signal der kapazitätsbasierten Insassenerfassungseinrichtung als auch das zweite Belegt-Signal der gewichtsbasierten Insassenerfassungseinrichtung vorliegt.

3. Insassenerfassungssystem nach Anspruch 1 oder 2,
**dadurch gekennzeichnet,**
**dass** die Steuer- und/oder Auswerteeinrichtung in dem Fall, dass weder das erste Belegt-Signal der kapazitätsbasierten Insassenerfassungseinrichtung noch das zweite Belegt-Signal der gewichtsbasierten Insassenerfassungseinrichtung vorliegt, ein Nicht-belegt-Bestätigungssignal erzeugt.

4. Insassenerfassungssystem nach Anspruch 3,
**dadurch gekennzeichnet,**
**dass** die Steuer- und/oder Auswerteeinrichtung das Nicht-belegt-Bestätigungssignal nur dann erzeugt, wenn weder das erste Belegt-Signal der kapazitätsbasierten Insassenerfassungseinrichtung noch das zweite Belegt-Signal der gewichtsbasierten Insassenerfassungseinrichtung vorliegt.

5. Insassenerfassungssystem nach einem der vorhergehenden Ansprüche,
**dadurch gekennzeichnet,**
**dass** die Steuer- und/oder Auswerteeinrichtung in dem Fall, dass weder das erste Belegt-Signal der kapazitätsbasierten Insassenerfassungseinrichtung noch das zweite Belegt-Signal der gewichtsbasierten Insassenerfassungseinrichtung vorliegt, einen der Justierung der kapazitätsbasierten Insassenerfassungseinrichtung dienenden Lernzyklus für den nicht belegten Fahrzeugsitz auslöst.

6. Insassenerfassungssystem nach einem der vorhergehenden Ansprüchen,
**dadurch gekennzeichnet,**
**dass** die Antennenanordnung (36) in dem Fall, dass weder das erste Belegt-Signal der kapazitätsbasierten Insassenerfassungseinrichtung noch das zweite Belegt-Signal der gewichtsbasierten Insassenerfassungseinrichtung vorliegt, über die Steuer- und/oder Auswerteeinrichtung deaktiviert wird.

7. Insassenerfassungssystem nach einem der vorhergehenden Ansprüche,
**dadurch gekennzeichnet,**
**dass** in dem Fall, dass weder das erste Belegt-Signal der kapazitätsbasierten Insassenerfassungseinrichtung noch das zweite Belegt-Signal der gewichtsbasierten Insassenerfassungseinrichtung vorliegt, die gewichtsbasierte Insassenerfassungseinrichtung zur Überwachung des Zustands der Schalteranordnung (32) aktiviert bleibt.

8. Insassenerfassungssystem nach einem der vorhergehenden Ansprüche,
**dadurch gekennzeichnet,**
**dass** die Schalteranordnung (32) in der Antennenanordnung (36) integriert ist.

9. Insassenerfassungssystem nach einem der vorhergehenden Ansprüche,
**dadurch gekennzeichnet,**
**dass** die Antennenanordnung (36) mehrere Antennen (34) umfasst.

10. Insassenerfassungssystem nach einem der vorhergehenden Ansprüche,
**dadurchgekennzeichnet,**
**dass** die Schalteranordnung (32) mehrere Schalter (10) umfasst.

11. Insassenerfassungssystem nach einem der vorhergehenden Ansprüche,
**dadurch gekennzeichnet,**
**dass** die Antennenanordnung (36) und/oder die Schalteranordnung (32) in Form einer flexiblen gedruckten Schaltung ausgeführt sind und die Schalteranordnung (32) in der Antennenanordnung (36) integriert ist.

12. Insassenerfassungssystem nach einem der vorhergehenden Ansprüche,
**dadurch gekennzeichnet,**
**dass** die beiden Kontakte eines jeweiligen Schalters (10) der Schalteranordnung (32) durch definierte Abschnitte zweier benachbarter Antennen (34) der Antennenanordnung (36) gebildet sind.

13. Insassenerfassungssystem nach Anspruch 12,
**dadurch gekennzeichnet,**
**dass** durch definierte Abschnitte eines jeweiligen Antennenpaares die Kontakte mehrerer Schalter (10) der Schalteranordnung (32) gebildet werden.

14. Insassenerfassungssystem nach einem der vorhergehenden Ansprüche,
**dadurch gekennzeichnet,**
**dass** eine jeweilige Antenne (34) der Antennenanordnung (36) durch eine Kupferschicht (42) gebildet ist.

15. Insassenerfassungssystem nach Anspruch 14,
**dadurchgekennzeichnet,**
**dass** die Antennenanordnung (36) mehrere jeweils durch eine Kupferschicht (42) gebildete Antennen (34) umfasst und diese Antennen (34) jeweils mit einer Isolierschicht (18) versehen sind.

16. Insassenerfassungssystem nach Anspruch 15,
**dadurch gekennzeichnet,**
**dass** einander benachbarte mit Isolierschichten (18) versehene Antennen (34) mechanisch jeweils über ein Klebeband (46) miteinander verbunden sind.

17. Insassenerfassungssystem nach einem der vorhergehenden Ansprüche,
**dadurch gekennzeichnet,**
**dass** ein jeweiliger in Form einer flexiblen gedruckten Schaltung ausgeführter Schalter (10) der Schalteranordnung (32) zwei vorzugsweise durch Antennenabschnitte gebildete elektrische Kontakte (12, 14) umfasst, die randseitig durch wenigstens einen insbesondere flexiblen Abstandshalter (16) voneinander getrennt sind, wobei wenigstens einer der Kontakte (12, 14) bei einer entsprechenden Druckbeaufschlagung zum jeweils anderen Kontakt hin eindrückbar ist.

18. Insassenerfassungssystem nach Anspruch 17,
**dadurch gekennzeichnet,**
**dass** außen auf die elektrischen Kontakte (12, 14) jeweils eine insbesondere aus PET bestehende Isolierschicht (18) aufgebracht, insbesondere aufgeklebt ist.

19. Insassenerfassungssystem nach Anspruch 17 oder 18,
**dadurch gekennzeichnet,**
**dass** der Abstandshalter (16) mit den beiden elektrischen Kontakten (12, 14) verklebt ist.

20. Insassenerfassungssystem nach einem der vorhergehenden Ansprüche,
**dadurch gekennzeichnet,**
**dass** der Abstandshalter (16) ein Isolierband (20) umfasst.

21. Insassenerfassungssystem nach einem der vorhergehenden Ansprüche,
**dadurch gekennzeichnet,**
**dass** der Abstandshalter (16) zwischen dem Isolierband (20) und den beiden elektrischen Kontakten (12, 14) jeweils ein Laminat (22) aufweist.

22. Insassenerfassungssystem nach Anspruch 21,
**dadurch gekennzeichnet,**
**dass** die Laminate (22) jeweils mit dem Isolierband (20) und dem betreffenden elektrischen Kontakt (12 bzw. 14) verklebt sind.

23. Antennen- und Schalteranordnung für ein Insassenerfassungssystem (38) nach einem der vorhergehenden Ansprüche,
**dadurchgekennzeichnet,**
**dass** sie in Form einer flexiblen gedruckten Schaltung ausgeführt ist, bei der die Schalteranordnung (32) in der Antennenanordnung (36) integriert ist.
